# EUROPEAN PATENT SPECIFICATION

(11) **EP 2 030 890 B1**
(45) Date of publication and mention of the grant of the patent: **15.05.2013**
(21) Application number: 08005810.0
(22) Date of filing: 26.03.2008
(51) Int. Cl.: B62M 25/08, B62K 23/06, B62M 9/132

(54) **Bicycle component with position sensing**
Fahrradkomponente mit Positionsmessung
Composant de bicyclette avec détection de position

(30) Priority: 21.08.2007 US 842211
(43) Date of publication of application: 04.03.2009
(73) Proprietor: SHIMANO INC., Sakai City, Osaka 590-8577 (JP)
(72) Inventor: Miki, Yoshimitsu c/o Shimano Inc., Sakai-City Osaka 590-8577 (JP); Sasaki, Bungo, Sakai-City Osaka 590-8577 (JP); Sato, Hisayuki c/o Shimano Inc., Sakai-City Osaka 590-8577 (JP)
(74) Representative: Hofmann, Harald

(56) References cited:
- EP-A- 1 279 929
- EP-A- 1 422 135
- EP-A- 1 806 275

## Description

### Field of the Invention

This invention generally relates to a bicycle component that is movable between at least two positions. More specifically, the present invention relates to a bicycle component with position sensing for sensing a position of part of the bicycle component (e.g., a shift operating device, a derailleur, etc.).

### Background Information

Bicycling is becoming an increasingly more popular form of recreation as well as a means of transportation. Moreover, bicycling has become a very popular competitive sport for both amateurs and professionals. Whether the bicycle is used for recreation, transportation or competition, the bicycle industry is constantly improving the various components of the bicycle.

Most bicycles are provided with a drive train having multiple gears that allows the rider to select a particular gear for a particular situation. There are many types of shifting arrangements and drive trains that are currently available on the market. In most cases, a gear position indicator is provided to inform the rider of the current gear selection. In the case of mechanical shift operating device, a mechanical gear position indicator is often used to indicate the gear position. Some of these mechanical gear position indicators are operated by a cable that is connected to the shift operating device. Typically, a separate gear position indicator is provided for each of the shift operating devices. For example of this type of arrangement is disclosed in U.S. Patent No. 6,647,824 to Watarai (assigned to Shimano Inc.).

Recently, bicycles have been provided with cycle computers to inform the rider of various traveling conditions of the bicycle. These cycle computers typically provide the rider with information about the current gear position. When a cycle computer is used, the cycle computer can display the gear position for each of the shift operating devices in a single display unit at a central location of the handlebar. This very convenient for the rider. In order to use the cycle computer to display the current gear positions of the derailleurs, the cycle computer needs to receive electrical signals that are indicative of the gear positions of the derailleurs. Document EP 1 279 929 discloses a bicycle device according to the preamble of claim 1.

In view of the above, it will be apparent to those skilled in the art from this disclosure that there exists a need for an improved bicycle component. This invention addresses this need in the art as well as other needs, which will become apparent to those skilled in the art from this disclosure.

### SUMMARY OF THE INVENTION

One object of the present invention is to provide a bicycle component that can easily and accurately identify one of predetermined operating positions of the bicycle component.

The foregoing objects can basically be attained by providing a bicycle component that basically comprises a base member, a movable portion, a magnetic element and a position sensing device. The base member is configured to be attached to a bicycle. The movable portion is movably coupled to the base member. The movable portion includes a plurality of predetermined operating positions. The magnetic element comprises a plurality of magnets, each forming a south pole and a north pole, and is attached to one of the base member and the movable portion. The position sensing device is attached to the other one of the base member and the movable portion. The position sensing device includes a three Hall-effect sensor elements sensitive to a presence of a magnetic field to generate an analog signal and comprising an analog-to-digital conversion unit that is configured to convert the analog signal from the sensor element into a digital signal to identify one of the predetermined operating positions of the movable portion, each of the three Hall-effect sensor element switches between three signal states, a first signal state indicating detection of a north pole of one of the plurality of magnets, a second signal state indicating detection of a south pole of one of the plurality of magnets, and a third state indicating detection of no magnetic field of one of the plurality of magnets, whereby the three sensor elements produces a combination of signal states to identify one of the predetermined operating positions of the movable portion.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:

Figure 1 is a side elevational view of bicycle equipped with a pair of bicycle control (brake/shift) device in accordance with a preferred embodiment of the present invention;

Figure 2 is an enlarged partial perspective view of the drop type handlebar with the bicycle control (brake/shift) devices in accordance with the illustrated embodiment of the present invention;

Figure 3 is an enlarged partial outside perspective view of the left bicycle control (brake/shift) device with the base member removed to show the overall structure of the shift control unit and the first and second shift operating levers;

Figure 4 is an exploded perspective view of selected parts of the shift control unit, the control member and the second shift operating lever;

Figure 5 is a rear side elevational view of the takeup member and the position sensing device for the left bicycle control (brake/shift) device;

Figure 6 is a simplified edge elevational view of the positioning member, the takeup member and the position sensing device for the left bicycle control (brake/shift) device with the positioning member and the takeup member in the low gear position;

Figure 7 is a simplified edge elevational view of the positioning member, the takeup member and the position sensing device for the left bicycle control (brake/shift) device with the positioning member and the takeup member in the top gear position;

Figure 8 is an enlarged partial outside perspective view of the right bicycle control (brake/shift) device with the base member removed to show the overall structure of the shift control unit and the first and second shift operating levers;

Figure 9 is a rear side elevational view of the takeup member and the position sensing device for the right bicycle control (brake/shift) device;

Figure 10 is an edge elevational view of the takeup member and the position sensing device for the right bicycle control (brake/shift) device;

Figure 11 is a rear side elevational view of the takeup member for the right bicycle control (brake/shift) device with the position sensing device shown in phantom lines to illustrate one of the gear positions;

Figure 12 is a rear side elevational view of the takeup member for the right bicycle control (brake/shift) device with the position sensing device shown in phantom lines to illustrate another of the gear positions;

Figure 13 is an outside elevational view of a front derailleur (i.e., bicycle component) in accordance equipped with another embodiment of the present invention;

Figure 14 is a rear elevational view of the front derailleur illustrated in Figure 13;

Figure 15 is a top plan view of the front derailleur illustrated in Figures 13 and 14;

Figure 16 is an enlarged, rear elevational view of a portion of the front derailleur illustrated in Figures 13 to 15; and

Figure 17 is a cross sectional view of a portion of the front derailleur illustrated in Figures 13 to 15 as along section line 17-17 of Figure 16.

### DETAILED DESCRIPTION OF THE PREFERRED EMBODIMENTS

Selected embodiments of the present invention will now be explained with reference to the drawings. It will be apparent to those skilled in the art from this disclosure that the following descriptions of the embodiments of the present invention are provided for illustration only and not for the purpose of limiting the invention as defined by the appended claims and their equivalents.

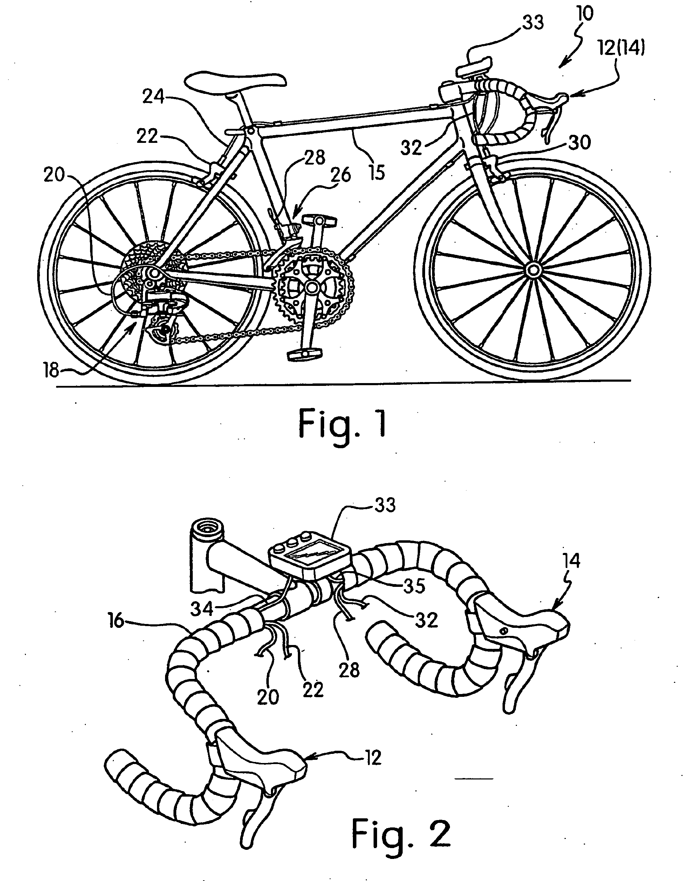

Referring initially to Figures 1 and 2, a bicycle 10 is illustrated in accordance with a pair of bicycle control devices 12 and 14 in accordance with one embodiment of the present invention. The bicycle 10 has a frame 15 with a handlebar 16 pivotally mounted to the frame 15. The bicycle control devices 12 and 14 are mounted on the handlebar 16. The bicycle control device 12 is a right hand side control device operated by the rider's right hand, while the bicycle control device 14 is a left hand side control device operated by the rider's left hand. In the illustrated embodiment, the bicycle control device 12 is operatively coupled to a rear derailleur 18 via a shift control cable 20 and a rear brake device 22 via a brake control cable 24. The bicycle control device 14 is operatively coupled to a front derailleur 26 via a shift control cable 28 and a front brake device 30 via a brake control cable 32. The rear and front derailleurs 18 and 26 are fixedly mounted to portions of the frame 15. Alternatively, the bicycle control devices 12 and 14 can be switched so that the rider can operate the rear derailleur 18 and the front derailleur 26 with opposite hands and/or operate the rear and front brake devices 22 and 30 with opposite hands. Preferably, the cables 20, 24, 28 and 32 are conventional bicycle control cables that have an outer casing the covers an inner wire.

A cycle computer 33 is mounted on the handlebar 16 for providing information to the rider, including but no limited to, gear positions corresponding to the positions of the rear derailleur 18 and the front derailleur 26. The cycle computer 33 is electrically coupled to the bicycle control device 12 by a first electrical wire 34 for receiving an electrical signal that is indicative of the gear position of the rear derailleur 18. The cycle computer 33 is electrically coupled to the bicycle control device 14 by a second electrical wire 35 for receiving an electrical signal that is indicative of the gear position of the front derailleur 26.

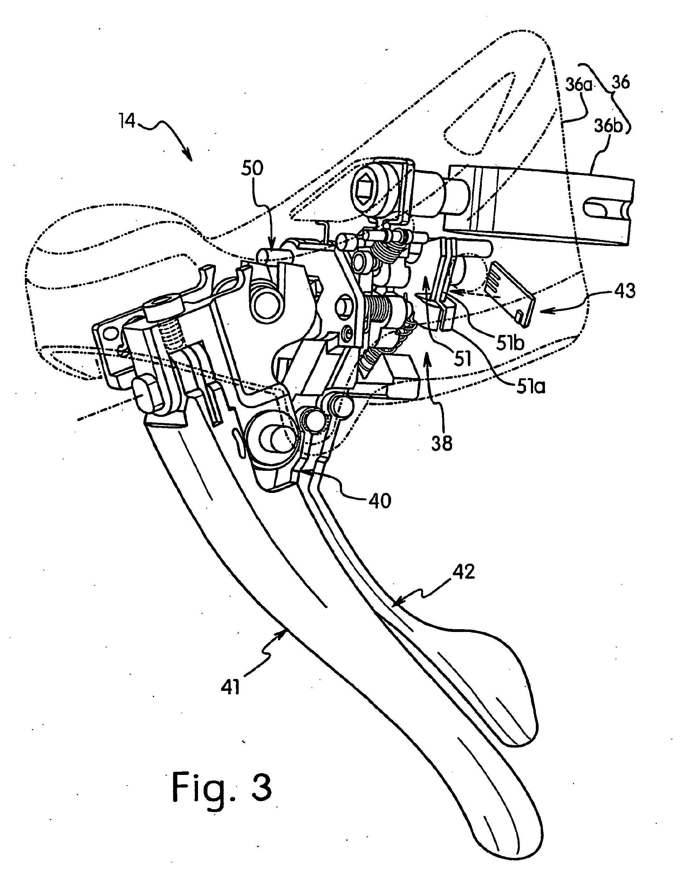

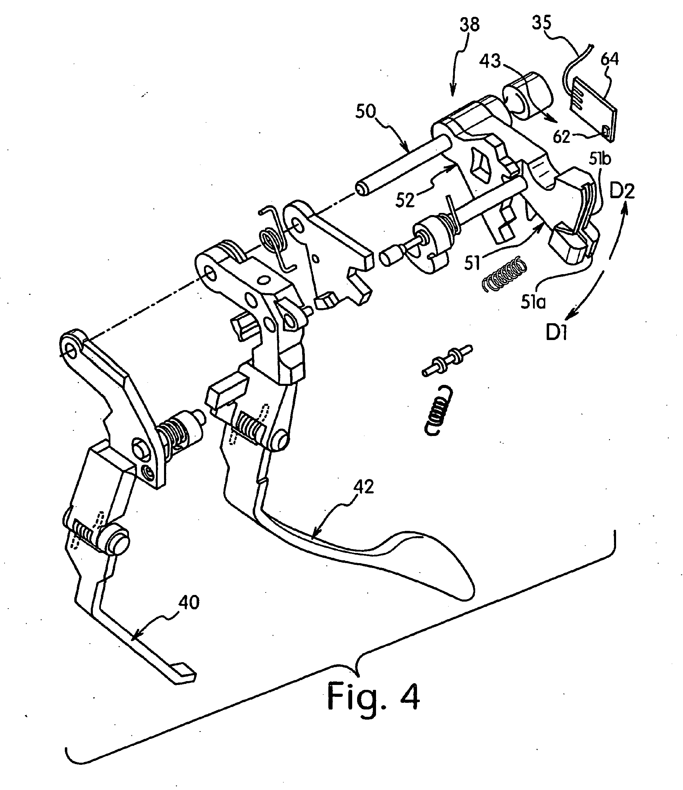

Referring now to Figures 3 and 4, the bicycle control device 14 basically includes a base member 36, a shift control unit 38, a control (wire pulling) member 40, a first shift operating lever 41 and a second shift operating lever 42. The bicycle control device 14 also includes a gear positioning indicator 43 for producing an electrical signal that is indicative of an operating (gear) position of the front derailleur 26 based on a current position of the shift control unit 38.

The base member 36 is fixedly mounted to the handlebar 16 in a relatively conventional manner. In particular, the base member 36 has a body 36a and a handlebar mounting structure 36b, which is preferably a conventional band clamp or similar structure. Thus, the base member 36 is configured and arranged to be attached to the bicycle 10.

The first shift operating lever 41 is a dual function operating lever that performs a braking operation in addition to a shifting operation. Thus, the bicycle control device 14 is configured and arranged to perform both a braking operation and a shifting operation as a single integrated unit that is mounted to the handlebar 16. In the illustrated embodiment, the first shift operating lever 41 is configured and arranged to perform a wire pulling operation and a braking operation, while the second shift operating lever 42 is configured and arranged to perform a wire releasing operation.

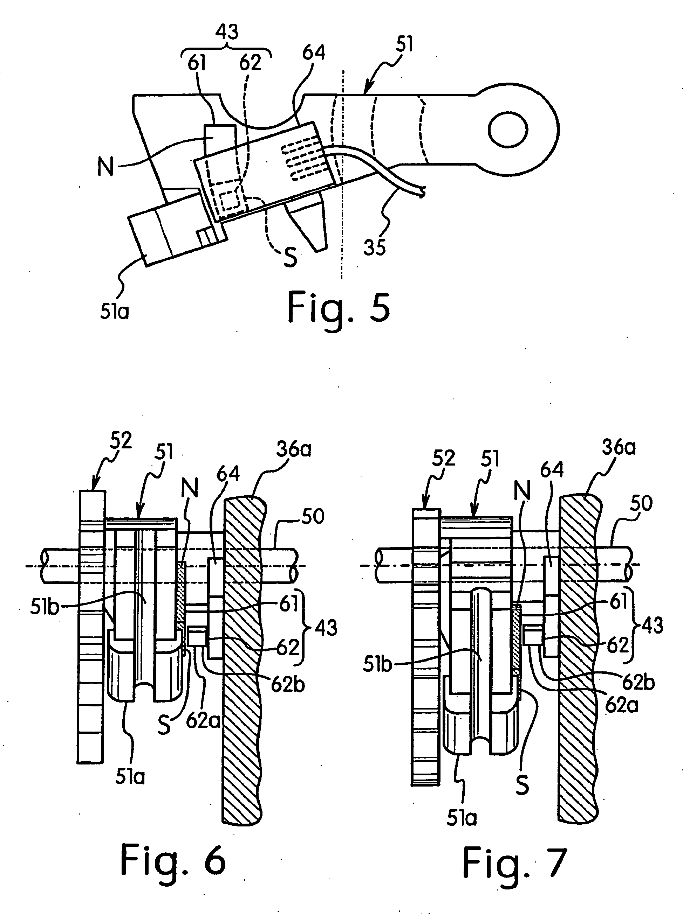

In the illustrated embodiment, as seen in Figures 3 and 4, the shift control unit 38 is a cable operating device that includes, among other parts, a shift unit axle 50, a wire takeup member 51 and a positioning plate or member 52. The wire takeup member 51 and the positioning plate 52 are fixed together such that they pivot as a unit on the shift unit axle 50. The distal end portion of the wire takeup member 51 has a peripheral edge with an inner wire attachment structure 51a and a wire receiving groove 51b. Thus, the wire takeup member 51 is attached to the inner wire of the shift control cable 28 to pull and release the inner wire of the shift control cable 28 in response to operation of the first and second shift operating levers 41 and 42, respectively. The shift control unit 38 has several pawls (not numbered) and other members (not numbered) for selectively holding the takeup member 51 and the positioning plate 52 in one of a plurality of predetermined operating positions (e.g., a low operating (gear) position (Figure 6) and a top operating (gear) position (Figure 7) in the case of a bicycle with two front sprockets as shown). Since the present invention does not depend upon the precise structure of the shift control unit 38, the remaining parts of the shift control unit 38 will not be further discussed in detail herein. In fact, the present invention can be applied to other types of the shift control unit and/or other bicycle components with a movable portion that has a plurality of predetermined positions.

Generally, the first shift operating lever 41 is operatively coupled to the shift control unit 38 via the control member 40 to operate the shift control unit 38 (mainly, the wire takeup member 51) in a first operating direction D1 or a wire pulling direction about the shift unit axle 50 of the shift control unit 38. The second shift operating lever 42 is operatively coupled to the shift control unit 38 to operate the shift control unit 38 (mainly, the wire takeup member 51) in a second operating direction D2 or a wire releasing direction about the shift unit axle 50 of the shift control unit 38.

In a case where there are only two front sprockets so that the front derailleur 26 only has two gear positions, the position of the wire takeup member 51 is sensed by the gear positioning indicator 43 to indicate the top and low gear positions of the front derailleur 26. In particular, the gear positioning indicator 43 produces a first electrical signal that is indicative of the wire takeup member 51 being in a pulled position, which corresponds to the top gear position, e.g., after the first shift operating lever 41 has been operated. The first electrical signal is sent to the cycle computer 33, where the top gear position of the front derailleur 26 is displayed to the rider. When the wire takeup member 51 is a released position, e.g., the second shift operating lever 42 has been operated, a second electrical signal is produced that is indicative of the wire takeup member 51 being in the released position, which corresponds to the low gear position of the front derailleur 26. This second electrical signal is sent to the cycle computer 33, where the low gear position of the front derailleur 26 is displayed to the rider. Of course, the gear positioning indicator 43 can be modified to produce additional signals or no signal to indicative of a particular position of the front derailleur 26 as needed and/or desired. Thus, the gear positioning indicator 43 is configured and arranged to produce one or more electrical signals to indicate a position of the front derailleur 26 based on a current position of the shift control unit 38.

Referring now to Figures 5 to 7, the gear positioning indicator 43 of the first embodiment will now be discussed in more detail. Basically, the gear positioning indicator 43 includes a magnetic element 61 and a position sensing device 62. In the illustrated embodiment, the magnetic element 61 is attached directly to the wire takeup member 51 (i.e., a movable portion) and the position sensing device 62 is attached to the body 36a of the base member 36 (i.e., a fixed portion) by a printed circuit board 64. However, the magnetic element 61 can be attached to either a fixed (non-movably) portion of the control device 14 or a movable portion of the control device 14 that indicates a current position of the wire takeup member 51, while the position sensing device 62 can be attached to the other portion of the control device 14.

As indicated above, the wire takeup member 51 (i.e., the movable portion) includes a plurality of predetermined operating positions (i.e., two in the illustrated embodiment). Since the control device 14 of the illustrated embodiment only has two positions, the magnetic element 61 includes a single magnet with a south pole S and a north pole N. Of course, it will be apparent from this disclosure that several magnets can be used as needed and/or desired.

The position sensing device 62 includes a sensor element 62a and an analog-to-digital conversion unit 62b. In illustrated embodiment, the position sensing device 62 includes a single Hall-effect digital sensor that is formed with the sensor element 62a and the analog-to-digital conversion unit 62b. The position sensing device 62 (Hall-effect digital sensor) is an integrated circuit that switches in response to changes in magnetic fields created by movement of the magnetic element 61. The position sensing device 62 generally switches to a first signal state when the magnetic field of south pole S of the magnetic element 61 comes close to produce a sufficient strength at the sensor element 62a, and switches to a second signal state when the magnetic field of the north pole of the magnetic element 61 comes close to produce a sufficient strength at the sensor element 62a. However, no output signal (e.g., a third signal state) is produce if the magnetic field is removed from the sensor element 62a. Hall-effect digital sensors are well known devices that are commercially available. Thus, the position sensing device 62 will not be discussed and/or illustrated in detail herein.

Moreover, while the position sensing device 62 produces the first and second electrical signals in illustrated embodiment, as mentioned above, it will be apparent from this disclosure that that the position sensing device 62 can produce a single signal indicative of one operating position of the wire takeup member 51 (i.e., the movable portion) and then produce no signal when the operating position of the wire takeup member 51 is in another one operating positions of the wire takeup member 51 (i.e., the movable portion).

The sensor element 62a is sensitive to a presence of a magnetic field so as to generate an analog signal. Thus, the sensor element 62a detects the magnetic element 61 to produce a first analog signal when the sensor element 62a is located in the magnetic field of the south pole S of the magnetic element 61 and produce a second analog signal when the sensor element 62a is located in the magnetic field of the north pole N.

The analog-to-digital conversion unit 62b is configured to convert the analog signal from the sensor element 62a into a digital signal to identify one of the predetermined operating positions of the wire takeup member 51 (i.e., the movable portion). In particular, the analog-to-digital conversion unit 62b outputs a first digital signal indicative of a first operating (gear) position of the predetermined operating positions of the wire takeup member 51 (i.e., the movable portion) when the sensor element 62a senses the south pole S of the magnetic element 61. The analog-to-digital conversion unit 62b outputs a second digital signal indicative of a second operating (gear) position of the predetermined operating positions of the wire takeup member 51 (i.e., the movable portion) when the sensor element 62a senses the north pole N.

The cycle computer 33 functions as a gear position identifying unit that is configured to identify one of the predetermined operating (gear) positions of the wire takeup member 51 (i.e., the movable portion) based on first and second digital signals from the analog-to-digital conversion unit 62b of the position sensing device 62. In particular, the cycle computer 33 (position identifying unit) identifies the first operating (gear) position of the predetermined operating positions of the wire takeup member 51 (i.e., the movable portion) when the sensor element 62a senses the south pole S the magnetic element 61. The cycle computer 33 (position identifying unit) identifies the second operating (gear) position of the predetermined operating positions of the wire takeup member 51 (i.e., the movable portion) when the sensor element 52a senses the north pole N the magnetic element 61. In other words, the first and second electrical signals outputted from the gear position indicator 43 are same as the first and second digital signals outputted from the position sensing device 62. Alternatively, the first and second digital signals can be modified to be first and second electrical signals.

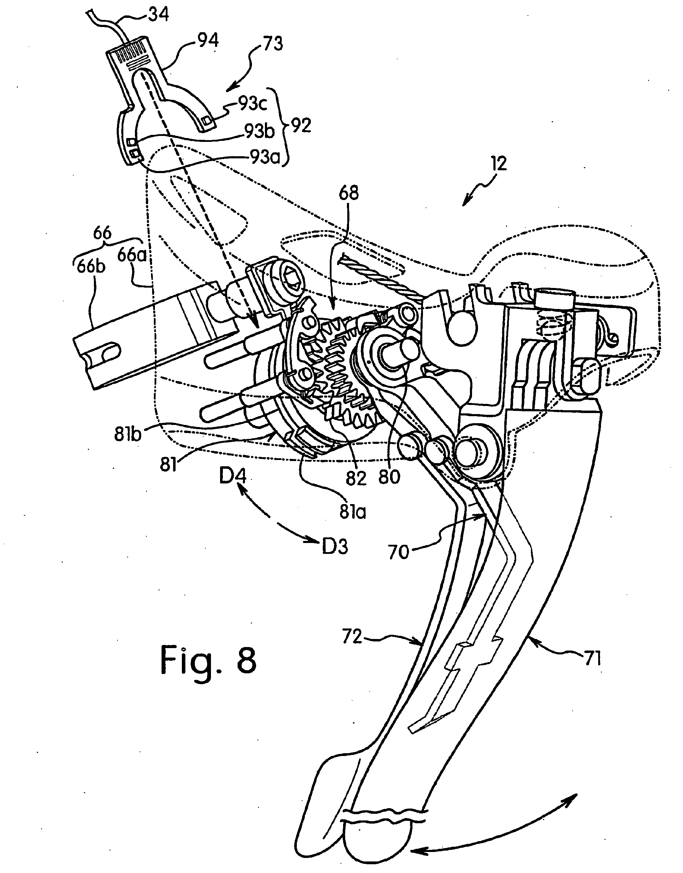

Referring now to Figures 8 to 12, the bicycle control device 12 will now be discussed. The bicycle control device 12 basically includes a base member 66, a shift control unit 68, a control (wire pulling) member 70, a first shift operating lever 71 and a second shift operating lever 72. The right hand side bicycle control device 12 also includes a gear positioning indicator 73 for producing an electrical signal that is indicative of an operating (gear) position of the rear derailleur 18 based on a current position of the shift control unit 68.

The base member 66 is fixedly mounted to the handlebar 16 in a relatively conventional manner. In particular, the base member 66 has a body 66a and a handlebar mounting structure 66b, which is preferably a conventional band clamp or similar structure. Thus, the base member 66 is configured and arranged to be attached to the bicycle 10.

The first shift operating lever 71 is a dual function operating lever that performs a braking operation in addition to a shifting operation. Thus, the bicycle control device 12 is configured and arranged to perform both a braking operation and a shifting operation as a single integrated unit that is mounted to the handlebar 16. In the illustrated embodiment, the first shift operating lever 71 is configured and arranged to perform a wire pulling operation and a braking operation, while the second shift operating lever 72 is configured and arranged to perform a wire releasing operation.

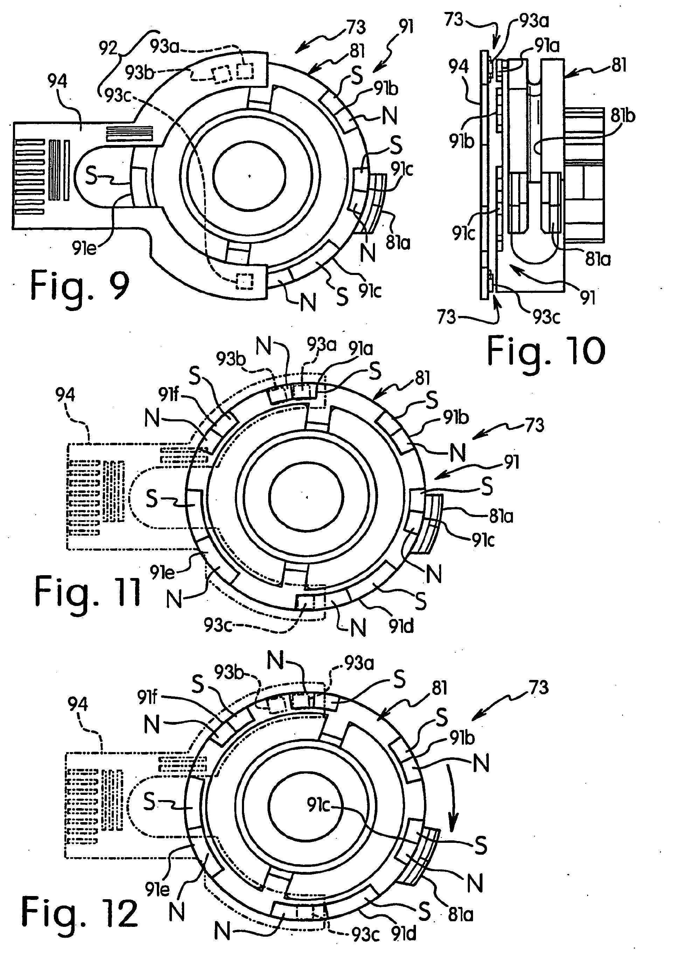

In the illustrated embodiment, as seen in Figure 8, the shift control unit 68 is a cable operating device that includes, among other parts, a shift unit axle 80, a wire takeup member 81 and a positioning plate or member 82. The wire takeup member 81 and the positioning plate 82 are fixed together such that they pivot as a unit on the shift unit axle 80. The wire takeup member 81 has a peripheral edge with an inner wire attachment structure 81a and a wire receiving groove 81b. Thus, the wire takeup member 81 is attached to the inner wire of the shift control cable 20 to pull and release the inner wire of the shift control cable 20 in response to operation of the first and second shift operating levers 71 and 72, respectively. The shift control unit 68 has several pawls (not numbered) and other members (not numbered) for selectively holding the takeup member 81 and the positioning plate 82 in one of a plurality of predetermined positions (e.g., a tenth gear position (Figure 11) and a ninth gear position (Figure 12) in the case of a bicycle with ten rear gears). Since the present invention does not depend upon the precise structure of the shift control unit 68, the remaining parts of the shift control unit 68 will not be further discussed in detail herein. In fact, the present invention can be applied to other types of the shift control unit and/or other bicycle components with a movable portion that has a plurality of predetermined positions.

Generally, the first shift operating lever 71 is operatively coupled to the shift control unit 68 via the control member 70 to operate the shift control unit 68 (mainly, the wire takeup member 81) in a third operating direction D3 or a wire pulling direction about the shift unit axle 80 of the shift control unit 68. The second shift operating lever 72 is operatively coupled to the shift control unit 68 to operate the shift control unit 38 (mainly, the wire takeup member 81) in a fourth operating direction D4 or a wire releasing direction about the shift unit axle 80 of the shift control unit 68.

In a case where there are ten rear gears so that the rear derailleur 18 has a ten gear positions, the position of the wire takeup member 81 is sensed by the gear positioning indicator 73 to indicate each of the ten gear positions of the rear derailleur 18. In particular, the gear positioning indicator 73 produces ten different electrical signals that is indicative of a current position of the wire takeup member 81. These electrical signals are sent to the cycle computer 33, where the current gear position of the rear derailleur 18 is displayed to the rider. Thus, the gear positioning indicator 73 is configured and arranged to produce a plurality of electrical signals to indicate a current operating (gear) position of the rear derailleur 18 based on a current position of the shift control unit 68.

Referring now to Figures 9 to 12, the gear positioning indicator 73 of the first embodiment will now be discussed in more detail. Basically, the gear positioning indicator 73 includes a magnetic element 91 and a position sensing device 92. The magnetic element 91 is attached to either a fixed (non-movably) portion of the control device 12 or a movable portion of the control device 12 that indicates a current position of the wire takeup member 81, while the position sensing device 92 is attached to the other portion of the control device 12 by a printed circuit board 94. For example, in the illustrated embodiment, the magnetic element 91 is attached directly to the wire takeup member 81 (i.e., the movable portion) and the position sensing device 92 is attached to the body 66a of the base member 66 (i.e., the fixed portion). Alternatively, the magnetic element 91 can be attached to some other part (e.g., the positioning plate 82) that moves in such a manner as to be able to indicate the position of the wire takeup member 81.

As indicated above, the wire takeup member 81 (i.e., the movable portion) includes a plurality of predetermined operating positions (i.e., ten in the illustrated embodiment). Since the control device 12 of the illustrated embodiment only has ten positions, the magnetic element 91 includes five bar magnets 91a to 91f, with each having a south pole S and a north pole N. Of course, it will be apparent from this disclosure that the number of magnets can be greater or fewer as needed and/or desired.

The position sensing device 92 includes three Hall-effect digital sensors 93a, 93b and 93c that are identical to the one used in the position sensing device 62. Thus, each of the Hall-effect digital sensors 93a, 93b and 93c includes a sensor element and an analog-to-digital conversion unit. The Hall-effect digital sensors 93a, 93b and 93c are each an integrated circuit that switches in response to changes in magnetic fields created by movement of the magnets 81a to 81f in and out of proximity of the Hall-effect digital sensors 93a, 93b and 93c. The Hall-effect digital sensors 93a, 93b and 93c generally switch to a first signal state when the magnetic field of south pole S of one the magnets 81a to 81f comes close to produce a sufficient strength at one the Hall-effect digital sensors 93a, 93b and 93c, and switches to a second signal state when the magnetic field of the north pole of one the magnets 81a to 81f comes close to produce a sufficient strength at one the Hall-effect digital sensors 93a, 93b and 93c. However, no output signal (e.g., a third signal state) is produced if the magnetic field is removed from the digital sensors 93a, 93b and 93c. As mentioned above, Hall-effect digital sensors are well known devices that are commercially available. Thus, the Hall-effect digital sensors 93a, 93b and 93c will not be discussed and/or illustrated in detail herein.

As seen in Figure 11, the position sensing device 92 produces three different signal states to indicate the tenth gear position. In particular, in the tenth gear position, the Hall-effect digital sensor 93a produces a first signal state indicating detection of a south pole S, the Hall-effect digital sensor 93b produces a second signal state indicating detection of a north pole N and the Hall-effect digital sensor 93c produces a third signal state indicating detection of a north pole N. In Figure 12, the position sensing device 92 produces three different signal states to indicate the ninth gear position. In particular, in the ninth gear position, the Hall-effect digital sensor 93a produces a first signal state indicating detection of a north pole N, the Hall-effect digital sensor 93b produces a second signal state indicating detection of no magnetic field being present and the Hall-effect digital sensor 93c produces a third signal state indicating detection of a north pole N. Likewise, in the first gear position to the eighth gear position, the Hall-effect digital sensors 93a, 93b and 93c produce different combinations of signal states indicating detection of a south pole S, a north pole N or no magnetic field being present. Thus, the cycle computer 33 (position identifying unit) identifies the current gear position of the predetermined operating positions of the wire takeup member 81 (i.e., the movable portion) depending on the combination of signal states detected by the Hall-effect digital sensors 93a, 93b and 93c.

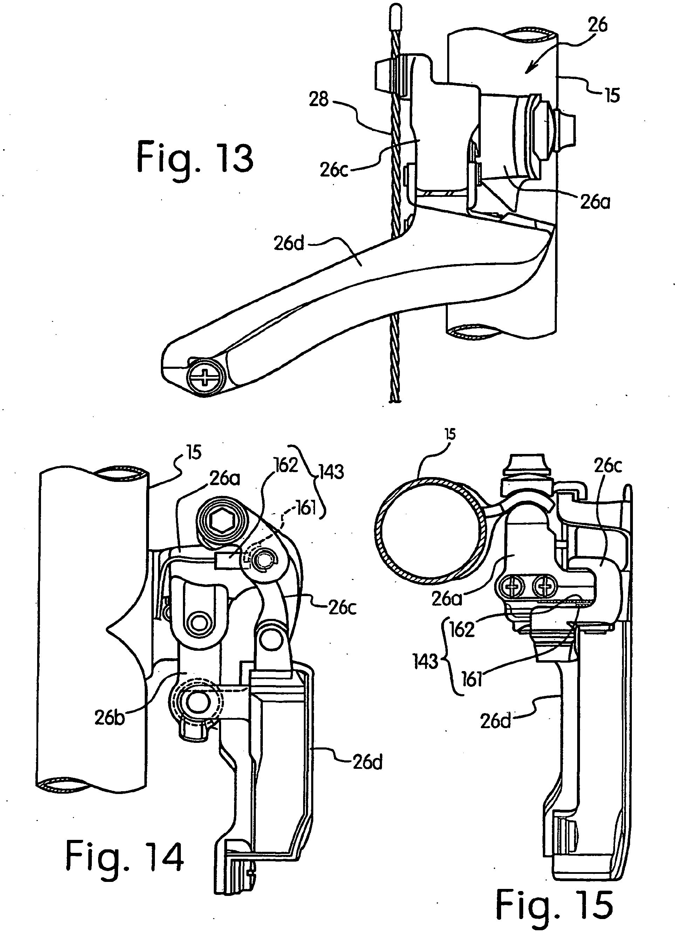

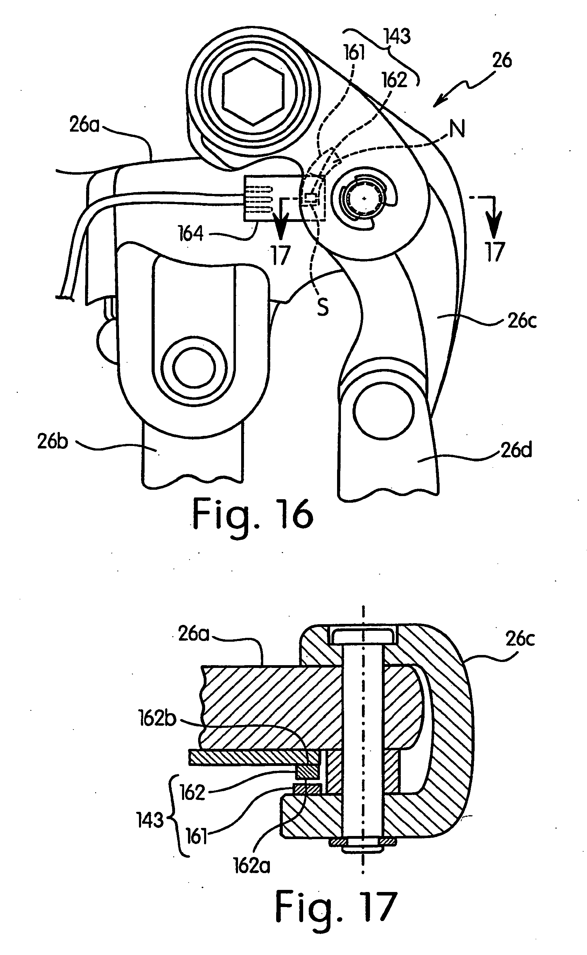

The rear and front derailleurs 18 and 26 can be provided with gear positioning indicators that provide signals to the cycle computer 33 for identifying the current gear position. For example, as seen in Figures 13 to 17, the front derailleur 26 is provided with a gear positioning indicator 143. The front derailleur 26 has a base member 26a, an inner link member 26b, an outer link member 26c and a chain guide 26d. The base member 26a is fixedly mounted to a portion of the frame 15 and constitutes a fixed portion, while the inner and outer link members 26b and 26c and the chain guide 26d constitutes a movable portion. Thus, the base member 66 is configured and arranged to be attached to the bicycle 10. The upper ends of the inner and outer link members 26b and 26c are pivotally coupled to the base member 26a. The lower ends of the inner and outer link members 26b and 26c are pivotally coupled to the chain guide 26d. The gear positioning indicator 143 basically includes a magnetic element 161 and a position sensing device 162. In the illustrated embodiment, the magnetic element 161 is attached directly to the outer link member 26c (i.e., part of the movable portion) and the position sensing device 162 is attached directly to the base member 26a (i.e., the fixed portion). Alternatively, the magnetic element 161 can be attached to the base member 26a (i.e., the fixed portion), and the position sensing device 62 can be attached to the outer link member 26c (i.e., part of the movable portion). In illustrated embodiment, the position sensing device 162 includes a single Hall-effect digital sensor that is formed with the sensor element 162a and the analog-to-digital conversion unit 162b. The position sensing device 162 is electrically coupled to the cycle computer 33 for supplying detection signals to the cycle computer 33 so that the cycle computer 33 functions as a gear position identifying unit. Thus, the cycle computer 33 identifies one of the predetermined operating (gear) positions of the chain guide 26d (i.e., part of the movable portion) by based on the digital signals from the analog-to-digital conversion unit 162b of the position sensing device 162. Since the gear positioning indicator 143 is identical in structure and function to the gear positioning indicator 43, except for its location, the description of the gear positioning indicator 143 will be omitted for the sake of brevity.

In the above discussed embodiments, the gear positioning indicators were installed on cable operated devices, which are merely selected examples. In other words, the gear positioning indicators is not limited to a cable operated system, but rather the gear positioning indicators can be used with other types of devices. For example, the gear positioning indicator can be used with pneumatically operated system, or hydraulically operated system.

### GENERAL INTERPRETATION OF TERMS

In understanding the scope of the present invention, the term "configured" as used herein to describe a component, section or part of a device includes hardware and/or software that is constructed and/or programmed to carry out the desired function. In understanding the scope of the present invention, the term "comprising" and its derivatives, as used herein, are intended to be open ended terms that specify the presence of the stated features, elements, components, groups, integers, and/or steps, but do not exclude the presence of other unstated features, elements, components, groups, integers and/or steps. The foregoing also applies to words having similar meanings such as the terms, "including", "having" and their derivatives. Also, the terms "part," "section," "portion," "member" or "element" when used in the singular can have the dual meaning of a single part or a plurality of parts. As used herein to describe the present invention, the following directional terms "forward, rearward, above, downward, vertical, horizontal, below and transverse" as well as any other similar directional terms refer to those directions of a bicycle equipped with the present invention. Accordingly, these terms, as utilized to describe the present invention should be interpreted relative to a bicycle equipped with the present invention as used in the normal riding position. Finally, terms of degree such as "substantially", "about" and "approximately" as used herein mean a reasonable amount of deviation of the modified term such that the end result is not significantly changed.

While only selected embodiments have been chosen to illustrate the present invention, it will be apparent to those skilled in the art from this disclosure that various changes and modifications can be made herein without departing from the scope of the invention as defined in the appended claims. Furthermore, the foregoing descriptions of the embodiments according to the present invention are provided for illustration only, and not for the purpose of limiting the invention as defined by the appended claims and their equivalents.

## Claims

1. A bicycle component comprising:
a base member (66) configured to be attached to a bicycle (10);
a movable portion (81) movably coupled to the base member, the movable portion including a plurality of predetermined operating positions;
a magnetic element (91) attached to one of the base member and the movable portion,; and
a position sensing device (92) attached to the other one of the base member and the movable portion, the position sensing device including a three Hall-effect sensor elements (93a, 93b, 93c) being sensitive to a presence of a magnetic field to generate an analog signal and comprising an analog-to-digital conversion unit (62b) configured to convert the analog signal from the sensor element into a digital signal to identify one of the predetermined operating positions of the movable portion,
**characterized in that**
the magnetic element (91) comprises a plurality of magnets (91a-91f), each forming a south pole and a north pole,
each of the three Hall-effect sensor elements (93a, 93b, 93c) switches between three signal states, a first signal state indicating detection of a north pole of one of the plurality of magnets (91 a-91 f), a second signal state indicating detection of a south pole of one of the plurality of magnets (91a-91f), and a third state indicating detection of no magnetic field of one of the plurality of magnets (91a-91f, whereby the three Hall-effect sensor elements (93a, 93b, 93c) produce a combination of signal states to identify one of the predetermined operating positions of the movable portion.

2. The bicycle component according to claim 1, wherein
the magnetic element is attached to the movable portion and the position sensing device is attached to the base member.

3. The bicycle component according to claim 1 or 2, further comprising
a position identifying unit (33) configured to identify one of the predetermined operating positions of the movable portion (81) based on the digital signal from the position sensing device (92).

4. The bicycle component according to claim 3, wherein
the position identifying unit (33) identifies a first position of the predetermined operating positions of the movable portion (81) when the Hall-effect sensor element senses the magnetic element (91), and
the position identifying unit identifies a second position of the predetermined operating positions of the movable portion when the Hall-effect sensor element does not sense a magnetic field.

5. The bicycle component according to any one of claims 1 to 4, wherein
the magnetic element (91) includes at least one magnet forming a south pole and a north pole; and
the analog-to-digital conversion unit outputs a first digital signal indicative of a first position of the predetermined operating positions of the movable portion when the sensor element senses the south pole, and the analog-to-digital conversion unit outputs a second digital signal indicative of a second position of the predetermined operating positions of the movable portion when the sensor element senses the north pole.

6. The bicycle component according to any one of claims 1 to 5, further comprising an additional magnetic element attached to the one of the base member and the movable portion.

7. The bicycle component according to any one of claims 1 to 6, wherein
the position sensing device (92) includes at least one Hall-effect digital sensor being formed with the sensor element and the analog-to-digital conversion unit.

8. The bicycle component according to any one of claims 1 to 7, wherein
the position sensing device (92) includes a pair of Hall-effect digital sensors with a first of the Hall-effect digital sensors being formed with the sensor element and the analog-to-digital conversion unit and a second of the Hall-effect digital sensors being formed with an additional sensor element and an additional analog-to-digital conversion unit.

9. The bicycle component according to any one of claims 1 to 8, wherein
the bicycle component is a gear shift operating device with the movable portion including a wire takeup member and a shift control unit.

10. The bicycle component according to any one of claims 1 to 8, wherein
the bicycle component is a derailleur with the movable portion including a link member and a chain guide with the link member coupling the base member and the chain guide together.

## Patentansprüche

1. Fahrradkomponente, umfassend:
ein Basiselement (66), konfiguriert um an einem Fahrrad (10) befestigt zu werden;
einen beweglichen Abschnitt (81), beweglich gekoppelt an das Basiselement, wobei der bewegliche Abschnitt eine Vielzahl von vorbestimmten Betätigungspositionen enthält;
ein magnetisches Element (91), befestigt an einem von dem Basiselement und dem beweglichen Abschnitt; und
ein Positionserfassungsgerät (92), befestigt an dem anderen von dem Basiselement und dem beweglichen Abschnitt, wobei das Positionserfassungsgerät drei Halleffektsensorelemente (93a, 93b, 93c) enthält, ansprechend auf das Vorhandensein eines magnetischen Feldes um ein Analogsignal zu erzeugen und umfassend eine Analogdigitalwandlereinheit (62b), konfiguriert zum Wandeln des Analogsignales von dem Sensorelement in ein digitales Signal zur Identifizierung einer der vorbestimmten Betätigungs- oder Betriebspositionen des beweglichen Abschnittes, **dadurch gekennzeichnet, dass**
das magnetische Element (91) eine Vielzahl von Magneten (91a - 91f) enthält, jeweils einen Südpol und einen Nordpol ausbildend,
wobei jedes der drei Halleffektsensorelemente (93a, 93b, 93c) zwischen drei Signalzuständen schaltet, einem ersten Signalzustand, angebend die Erfassung eines Nordpoles von einem der Vielzahl an Magneten (91a - 91f), einem zweiten Signalzustand, angebend die Erfassung eins Südpoles von einem der Vielzahl an Magneten (91a - 91 f) und
einem dritten Zustand, angebend die Erfassung von keinem magnetischen Feld von einem der Vielzahl an Magneten (91 a - 91 f), wodurch die drei Halleffektsensorelemente (93a, 93b, 93c) eine Kombination an Signalzuständen erzeugen um eine der vorbestimmten Betriebs- oder Betätigungspositionen des beweglichen Abschnittes zu identifizieren.

2. Fahrradkomponente gemäß Anspruch 1, bei welcher das magnetische Element an dem beweglichen Abschnitt befestigt ist und das Positionserfassungsgerät an dem Basiselement befestigt ist.

3. Fahrradkomponente gemäß Anspruch 1 oder 2, ferner umfassend eine Positionsidentifiziereinheit (33), konfiguriert zum Identifizieren einer der vorbestimmten Betriebs- oder Betätigungspositionen des beweglichen Abschnittes (81), basierend auf dem digitalen Signal von dem Positionserfassungsgerät (92).

4. Fahrradkomponente gemäß Anspruch 3, bei welcher die Positionsidentifiziereinheit (33) eine erste Position der vorbestimmten Betriebs- oder Betätigungspositionen des beweglichen Abschnittes (81) identifiziert, wenn das Halleffektsensorelement das magnetische Element (91) erfasst und
die Positionsidentifiziereinheit eine zweite Position der vorbestimmten Betriebs- oder Betätigungspositionen des beweglichen Abschnittes identifiziert wenn das Halleffektsensorelement kein magnetisches Feld erfasst.

5. Fahrradkomponente gemäß einem der Ansprüche 1 bis 4, bei welcher das magnetische Element (91) zumindest einen Magneten enthält, ausbildend einen Südpol und einen Nordpol; und
die Analogdigitalwandlereinheit ein erstes Digitalsignal ausgibt, indikativ für eine erste Position der vorbestimmten Betriebs- oder Bedienpositionen des beweglichen Abschnittes wenn das Sensorelement den Südpol erfasst, wobei die Analogdigitalwandlereinheit ein zweites Digitalsignal ausgibt, indikativ für eine zweite Position der vorbestimmten Betriebs- oder Betätigungspositionen des beweglichen Abschnittes, wenn das Sensorelement den Nordpol erfasst.

6. Fahrradkomponente gemäß einem der Ansprüche 1 bis 5, ferner umfassend ein zusätzliches Magnetelement beziehungsweise ein zusätzliches magnetisches Element, befestigt an dem einen von dem Basiselement und dem beweglichen Abschnitt.

7. Fahrradkomponente gemäß einem der Ansprüche 1 bis 6, bei welcher das Positionserfassungsgerät (92) zumindest einen Halleffektdigitalsensor enthält, ausgeführt mit dem Sensorelement und der Analogdigitalwandlereinheit.

8. Fahrradkomponente gemäß einem der Ansprüche 1 bis 7, bei welcher das Positionserfassungsgerät (92) ein Paar von Halleffektdigitalsensoren enthält, wobei ein erster der Halleffektdigitalsensoren ausgeführt ist mit dem Sensorelement und der Analogdigitalwandlereinheit und ein zweiter der Halleffektdigitalsensoren ausgeführt ist mit einem zusätzlichen Sensorelement und einer zusätzlichen Analogditigalwandlereinheit.

9. Fahrradkomponente gemäß einem der Ansprüche 1 bis 8, bei welcher die Fahrradkomponente eine Gangschaltbetätigungsvorrichtung ist, wobei der bewegliche Abschnitt ein Kabelaufnahme- oder Aufwickelelement und eine Schaltsteuereinheit enthält.

10. Fahrradkomponente gemäß einem der Ansprüche 1 bis 8, bei welcher die Fahrradkomponente ein Derailleur ist, wobei der bewegliche Abschnitt ein Kopplungselement und eine Kettenführung enthält, wobei das Kopplungselement das Basiselement und die Kettenführung miteinander koppelt.

## Revendications

1. Composant de bicyclette comprenant :
un élément de base (66), configuré pour être attaché à une bicyclette (10) ;
une partie mobile (81), couplée mobile à l'élément de base, la partie mobile comprenant une pluralité de positions fonctionnelles prédéterminées,
un élément magnétique (91), attaché à l'un de l'élément de base et de la partie mobile, et
un dispositif de détection de position (92), attaché à l'autre de l'élément de base et de la partie mobile, le dispositif de détection de position comprenant trois éléments de détection à effet Hall (93a, 93b, 93c), sensibles à une présence d'un champ magnétique, afin d'engendrer un signal analogique, et comprenant une unité de conversion analogique vers numérique (62b) configurée pour convertir le signal analogique depuis l'élément de détection en un signal numérique, pour identifier une des positions fonctionnelles prédéterminées de la partie mobile, **caractérisé en ce que**
l'élément magnétique (91) comprend une pluralité d'aimants (91a-91f), chacun formant un pôle sud et un pôle nord,
chacun des trois éléments de détection à effet Hall (93a, 93b, 93c) commutant entre trois états de signal, un premier état de signal indiquant une détection d'un pôle nord de l'un de la pluralité d'aimants (91a-91f), un deuxième état de signal indiquant la détection d'un pôle sud de l'un de la pluralité d'aimants (91a-91f), et un troisième état indiquant la détection d'un champ magnétique nul de l'un de la pluralité d'aimants (91a-91f), dans lequel les trois éléments de détection à effet hall (93a, 93b, 93c) produisent une combinaison d'états de signal, pour identifier l'une des positions fonctionnelles prédéterminées de la partie mobile.

2. Composant de bicyclette selon la revendication 1, dans lequel
l'élément magnétique est attaché à la partie mobile, et le dispositif de détection de position est attaché à l'élément de base.

3. Composant de bicyclette selon la revendication 1 ou 2, comprenant en outre une unité d'identification de position (33), configurée pour identifier une des positions fonctionnelles prédéterminées de la partie mobile (81), sur la base du signal numérique en provenance du dispositif de détection de position (92).

4. Composant de bicyclette selon la revendication 3, dans lequel
l'unité d'identification de position (33) identifie une première position des positions fonctionnelles prédéterminées de l'élément mobile (81) lorsque l'élément détecteur à effet Hall détecte l'élément magnétique (91), et
l'unité d'identification de position identifie une deuxième position des positions fonctionnelles prédéterminées de la partie mobile lorsque l'élément détecteur à effet Hall ne détecte pas de champ magnétique.

5. Composant de bicyclette selon l'une quelconque des revendications 1 à 4, dans lequel l'élément magnétique (91) comprend au moins un aimant formant un pôle sud et un pôle nord ; et
l'unité de conversion analogique vers numérique délivre un premier signal numérique indicateur d'une première position des positions fonctionnelles prédéterminées de la partie mobile lorsque l'élément détecteur détecte le pôle sud, et l'unité de conversion analogique vers numérique délivre un deuxième signal numérique indicateur d'une deuxième position des positions fonctionnelles prédéterminées de la partie mobile lorsque l'élément détecteur détecte le pôle nord.

6. Composant de bicyclette selon l'une quelconque des revendications 1 à 5, comprenant en outre
un élément magnétique additionnel attaché à l'un de l'élément de base et de la partie mobile.

7. Composant de bicyclette selon l'une quelconque des revendications 1 à 6, dans lequel le dispositif de détection de position (92) comprend au moins un détecteur numérique à effet Hall formé avec l'élément de détection et l'unité de conversion analogique vers numérique.

8. Composant de bicyclette selon l'une quelconque des revendications 1 à 7, dans lequel le dispositif de détection de position (92) comprend une paire de détecteurs numériques à effet Hall, avec un premier des détecteurs numériques à effet Hall formé avec l'élément détecteur et l'unité de conversion analogique vers numérique, et un deuxième des détecteurs numériques à effet Hall formé avec un élément détecteur additionnel et une unité de conversion analogique vers numérique additionnelle.

9. Composant de bicyclette selon l'une quelconque des revendications 1 à 8, dans lequel le composant de bicyclette est un dispositif d'actionnement de changement de vitesse, la partie mobile comprenant un élément tendeur de câble et une unité de commande de changement de vitesse.

10. Composant de bicyclette selon l'une quelconque des revendications 1 à 8, dans lequel
le composant de bicyclette est un dérailleur, la partie mobile comprenant un élément de liaison et un guide de chaîne, l'élément de liaison couplant ensemble l'élément de base et le guide de chaîne.
